Europäisches Patentamt

European Patent Office

Office européen des brevets

(19)

(11) **EP 0 816 043 A1**

(12) **EUROPÄISCHE PATENTANMELDUNG**

(43) Veröffentlichungstag:
07.01.1998 Patentblatt 1998/02

(51) Int. Cl.⁶: **B29C 45/16**, B65D 51/16

(21) Anmeldenummer: 97111043.2

(22) Anmeldetag: 02.07.1997

(84) Benannte Vertragsstaaten:
AT BE CH DE DK ES FI FR GB GR IE IT LI LU MC
NL PT SE

(30) Priorität: 03.07.1996 DE 19626792

(71) Anmelder:
W.L. GORE & ASSOCIATES GmbH
85640 Putzbrunn (DE)

(72) Erfinder: Schwarz, Robert
82031 Grünwald (DE)

(74) Vertreter:
Klunker . Schmitt-Nilson . Hirsch
Winzererstrasse 106
80797 München (DE)

(54) **Verfahren zur Herstellung eines Verschlusselements in Form eines Kunststoff-Spritzgussteils sowie ein durch dieses hergestelltes Verschlusselement**

(57)     Bei einem Verfahren zum Herstellen eines Verschlußelements in der Form eines Kunststoff-Spritzgußteils, wobei dieses Verschlußelement zum abgedichteten, lösbaren Verschließen einer in einem Gehäuse oder dgl. ausgebildeten komplementären Öffnung dient und wobei in das Verschlußelement wenigstens ein Filtermedium als Interface zwischen den Räumen innerhalb und außerhalb des Gehäuses integriert wird, ist vorgesehen, daß unter Anwendung eines Mehrkomponenten-Spritzgußverfahrens zunächst das Filtermedium in ein Trägerteil aus wenigstens einer ersten thermoplastischen Materialkomponente ein- oder angespritzt wird und daß anschließend das Trägerteil mit wenigstens einer zweiten, hinsichtlich ihrer Konsistenz bzw. Härte gegenüber der ersten Komponente unterschiedlichen thermoplastischen Materialkomponente zur Bildung eines resultierenden Formkörpers des Verschlußelements umspritzt wird.

Bei diesem Verfahren läßt sich das Verschluß-element (1) mit Hilfe desselben Mehrkomponenten-Spritzgußverfahrens, insbesondere Zweikomponenten-Spritzgußverfahrens, komplett fertigen und gleichzeitig mit dem Filtermedium versehen, so daß letztendlich der Fertigungsaufwand und die hiermit verbundenen Kosten wesentlich herabgesetzt werden können.

Das fertige Verschlußelement (1) besteht im wesentlichen aus dem Trägerteil (6) aus einem harten thermoplastischen Kunststoff, in das z. B. eine Druckausgleichsvorrichtung mit mikroporöser PTFE-Membrane (7) ein- oder angespritzt ist, und aus dem äußeren Formkörper (10) aus einem weichen thermoplastischen Kunststoff.

Fig. 1

EP 0 816 043 A1

## Beschreibung

Die Erfindung betrifft ein Verfahren zur Herstellung eines Verschlußelements in Form eines Kunststoff-Spritzgußteils zum abgedichteten, lösbaren Verschließen einer in einem Gehäuse, Behälter oder dgl. ausgebildeten komplementären Öffnung, wobei in das Verschlußelement wenigstens ein Filtermedium als Interface zwischen den Räumen innerhalb und außerhalb des Gehäuses oder dgl. integriert wird. Ferner bezieht sich die Erfindung auf ein Verschlußelement in Form eines Kunststoff-Spritzgußteils, welches nach dem Verfahren nach der Erfindung hergestellt wird.

Bei geschlossenen, ein mit seiner Umgebung im Stoffwechsel stehendes Medium. z. B. eine Flüssigkeit oder einen Feststoff, enthaltenden Behältern, Gehäuse oder dgl. tritt oftmals das Problem auf, daß ein solches Medium, beispielsweise in Folge von Temperaturschwankungen, sein Volumen verändert, was dazu führt, daß in dem entsprechenden Behälter oder Gehäuse ein Über- oder ein Unterdruck erzeugt wird, der in Abhängigkeit von der Funktion des Behälters oder des Gehäuses letztendlich äußerst schädlich und unter Umstanden auch gefährlich sein kann.

Dies trifft auch auf das freie Luft-/Gasvolumen in dem Behälter zu. Ein zusätzliches Problem entsteht z. B. dann, wenn Flüssigkeiten selbst ausgasen oder Gase binden. Im Falle von z. B. in Teilchenform vorliegenden Feststoffen gilt das gleiche.

Beispielsweise wird bei Meßgeräten zur Dämpfung des Systems das Meßgerätgehäuse nur zu etwa 90 bis 95% mit der Flüssigkeit, z. B. Glycerin-Silikonöl gefüllt. In dem verbleibenden Raum kann sich nun die Flüssigkeit ausdehnen, allerdings ist das Problem des unzulässigen Druckes auf die Gehäusewände oder Einrichtungen im Gehäuse nur verlagert, da infolge der Volumenausdehnung die im Gehäuse vorhandene Luft ihrerseits komprimiert wird. Insbesondere bei Feinmeßgeräten führte ein solcher Vorgang zu untolerierbaren Meßwertverfälschungen.

Um dieses Problem zu lösen, ist beispielsweise versucht worden, mit Hilfe eines Ventilsystems einen Druckausgleich herbeizuführen, wobei es sich jedoch herausgestellt hat, das durchgehend geöffnete Ventile den Nachteil besitzen, daß bei bestimmten Einbaulagen des Gehäuses durch die Öffnung Flüssigkeit austritt, was z. B. bei Meßgeräten keinesfalls tolerierbar ist.

Überdruckventile andererseits können nur einem Teilaspekt gerecht werden, da sie zwar das Austreten von Flüssigkeit verhindern, jedoch findet keine Begasung bei Unterdruck etwa nach Abkühlung des betreffenden Gehäuses oder Behälters statt.

Zweiseitig wirkende Ventile sind zwar denkbar, erfordern aber einen derart hohen Kostenaufwand, daß man sich meistens mit weniger anspruchsvollen Ventillösungen begnügt.

Es sind zwar auch Lösungen denkbar, bei welchen eine oder mehrere Wände des Behälters oder Gehäuses elastisch in der Weise verformbar sind, daß sie dem Über- bzw. Unterdruck im Gehäuse zu folgen vermögen, allerdings liegt es auf der Hand, daß solche Lösungen das Einsatzspektrum der Behälter oder Gehäuse oder dgl. stark begrenzen und darüberhinaus nur bei Behältern oder Gehäusen oder dgl. einsetzbar sind, welche lediglich geringe Druckdifferenzen zu bewältigen haben.

Eine befriedigende Lösung des oben erläuterten Problems wird in der DE-OS 3 325 329 beschrieben. Gemäß dieser Druckschrift ist vorgesehen, daß zum Zwecke eines Druckausgleichs in einem geschlossenen, Flüssigkeit enthaltenden Gehäuse dieses mindestens eine Öffnung aufweist, die mit einer Abdeckung aus einem flüssigkeitsundurchlässigen, jedoch gasdurchlässigen Material verschlossen ist. Eine Abdeckung dieser Art besteht beispielsweise aus einem porösem Tetrafluorethylen-Polymeren, wobei die Abdeckung gleichsam wie ein Ventil funktioniert, das nach beiden Seiten einen Gasaustausch gestattet. Infolgedessen kann eine Be- oder Entlüftung je nach dem Zustand in dem Gehäuse erfolgen, ohne daß die Gefahr des Austretens der Flüssigkeit besteht.

Darüberhinaus ist aus dem deutschen Gebrauchsmuster Nr. 29 511 683.8 eine Verschlußkappe für Behälter, Gehäuse oder dgl. bekannt, die mit einer Flüssigkeit oder einem in Teilchenform vorliegenden Feststoff, befüllbar sind, wobei wenigstens eine Öffnung des Behälters oder dgl. mit dieser Verschlußkappe in lösbarer Weise verschließbar ist und wobei in die Verschlußkappe eine Druckausgleichsvorrichtung mit wenigstens einer Membrane aus einem flüssigkeitsundurchlässigen oder für Feststoffteilchen undurchlässigen, jedoch gasdurchlässigen Material und ein Schwallschutzelement aus einem gasdurchlässigen Material zum Brechen des Schwalldruckes der Flüssigkeit oder des in Teilchenform vorliegenden Feststoffes auf die Membrane eingebaut sind. Diese bekannte Verschlußkappe ist insgesamt als ein Kunststoff-Spritzgußteil ausgebildet. wobei die Membrane bzw. die Membranen der Druckausgleichsvorrichtung in die Verschlußkappe integriert, insbesondere in einen oberen Deckelteil der Verschlußkappe ein- oder angespritzt ist oder sind. Aufgrund einer solchen Ausbildung der Verschlußkappe läßt sich diese komplett im Zuge eines einzigen Spritzgußvorganges fertigen und gleichzeitig zumindest mit der Druckausgleichsvorrichtung versehen, die wenigstens eine Membrane aufweist.

Aus der europäischen Patentanmeldung Nr. 0 155 115 ist ferner eine Druckausgleichsvorrichtung mit einem Filter in Form einer wasserundurchlässigen, jedoch luft- oder wasserdampfdurchlässigen Membrane bekannt. Insbesondere handelt es sich hierbei um eine mikroporöse Membrane, welche flach auf ein Trägerelement in Form eines Drahtnetzes aufgelegt ist, wobei diese aus Membrane und Drahtnetz bestehende Anordnung in einem diese Anordnung umfangsmäßig umgebenden ringförmigen Element aus einem Elastomer befestigt ist, welches an dem Umfang der Membrane und des Drahtnetzes angeformt ist, um hierdurch eine Dichtung zu bilden.

Ferner ist aus der EP-B1-0 417 344 ein in eine Gehäuseöffnung einsetzbares Druckausgleichselement bekannt, das im wesentlichen aus einer mittels eines zugehörigen Sicherungselements fixierten, gasdurchlässigen, jedoch ein Eindringen von Wasser in das entsprechende Gehäuse verhindernden Membran besteht. Das bekannte Druckausgleichselement wird in die entsprechende Gehäuseöffnung gesteckt und in seiner Endlage gegen eine Anlageschulter der Gehäuseöffnung durch das in der Gehäuseöffnung verkrallte Sicherungselement wasserdicht fixiert. Dieses Sicherungselement ist hierbei als ringförmiger Halter für die an ihm vormontierte Membran ausgebildet und am Rand mit einer umlaufenden Dichtlippe versehen, durch welche das komplette Druckausgleichselement nach dem Einstecken in die Gehäusewandöffnung in dieser wasserdicht verkrallt ist.

Eine weitere Ausbildung eines Druckausgleichselement ist aus der DE-A-37 07 050 bekannt. Auch dieses Druckausgleichselement weist eine Membrane auf, deren Rand in einem elastischen Dichtteil eingebettet ist, das in einem Abdeckteil aufgenommen und befestigt ist, wobei eine vormontierte Baueinheit aus Membran, Dichtteil und Abdeckteil des Druckausgleichselement gebildet ist.

Sowohl das Druckausgleichselement gemäß der EP-B1-0 417 344 als auch dasjenige gemäß der DE-A-37 07 050 weisen eine Membrane auf, die beispielsweise aus Polytetrafluorethylen (PTFE) gebildet ist, während die anderen Komponenten der Druckausgleichselemente z. B. als Kunststoff-Spritzgußteile ausgebildet sind, beispielsweise ist der ringförmige Halter für die Membrane bei dem Druckausgleichselement gemäß der EP 0 471 344 als ein einstückiges Teil aus einem einzigen Kunststoffmaterial ausgebildet.

Der vorliegenden Erfindung liegt nunmehr die Aufgabe zugrunde, ein verbessertes, jedoch mit einem verhältnismäßig geringen Fertigungs- und Kostenaufwand verbundenes Verfahren zum Herstellen eines Verschlußelements in Form eines Kunststoff-Spritzgußteils zu schaffen, wobei dieses Verschlußelement zum abgedichteten, lösbaren Verschließen einer in einem Gehäuse, Behälter oder dgl. ausgebildeten komplementären Öffnung dient und wobei in das Verschlußelement wenigstens ein Filtermedium als Interface zwischen den Räumen innerhalb und außerhalb des mit dem Verschlußelement zu versehenden Gehäuses oder dgl. integriert wird.

Diese Aufgabe wird gemäß der vorliegenden Erfindung dadurch gelöst, daß bei einem Verfahren zur Herstellung eines Verschlußelements in der Form eines Kunststoff-Spritzgußteils unter Anwendung eines Mehrkomponenten-Spritzgußverfahrens zunächst das Filtermedium in ein Trägerteil aus wenigstens einer ersten thermoplastischen Materialkomponente ein- oder angespritzt wird und anschließend das Trägerteil mit wenigstens einer zweiten hinsichtlich ihrer Konsistenz bzw. Härte gegenüber der ersten Komponente unterschiedlichen thermoplastischen Materialkomponente zur Bildung eines resultierenden Formkörpers des Verschlußelements umspritzt wird.

Gemäß weiterer vorteilhafter Ausgestaltung des Verfahrens nach der Erfindung ist vorgesehen, daß im Zuge eines Zweikomponenten-Spritzgußverfahrens für das Trägerteil ein harter thermoplastischer Kunststoff als erste Materialkomponente und für den resultierenden Formkörper des Verschlußelements ein weicher thermoplastischer Kunststoff als zweite Materialkomponente verwendet werden. Aufgrund dieser Verfahrensausgestaltung besteht die vorteilhafte Möglichkeit, das Filtermedium zunächst kunststoffspritztechnisch gemäß einem ersten Verfahrensschritt in oder an das Trägerteil aus dem harten thermoplastischen Kunststoff ein- oder anzuspritzen, wobei das Trägerteil vorzugsweise ringförmig und das Filtermedium vollständig umgebend ausgebildet wird. Infolgedessen wird das Filtermedium durch das Trägerteil stabil gefaßt und kann im Zuge des weiteren Herstellungsprozesses der Weiterverarbeitung zugeführt werden. Hierbei wird sodann das Trägerteil oder der sogenannte Vorspritzling mit dem weichen thermoplastischen Kunststoff umspritzt, um den resultierenden, äußeren Formkörper des Verschlußelements zu erhalten.

Für das erfindungsgemäße Verfahren hat es sich als besonders günstig herausgestellt, wenn ein harter thermoplastischer Kunststoff als erste Materialkomponente verwendet wird, der aus einer Gruppe ausgewählt ist, die enthält: Polybutylenterephthalat (PBTP), Polyoxymethylen (POM), Polyethylen (PE), Ultradur®, Delriu®, Ultramed®, verstärkte Kunststoffe, insbesondere mit Glasfasern verstärkte bzw. gefüllte und Kunststoffe; und wenn weiterhin ein weicher thermoplastischer Kunststoff als zweite Materialkomponente verwendet wird, der aus einer Gruppe ausgewählt ist, die enthält: thermoplastische Elastomere (TPE), insbesondere Santoprene®, Alcryn®, Hytrel®. Geolast®, Thermolast K®.

Besonders vorteilhaft ist es, wenn als weicher thermoplastischer Kunststoff ein thermoplastisches Elastomer (TPE) mit einer Shore-Härte im Bereich von ca. 40 Shore A bis ca. 80 Shore D verwendet wird.

Bezüglich der Härteprüfung von Elastomeren und harten Thermoplasten (Duroplasten) vgl. RÖMPS CHEMIELEXIKON, 8. Auflage, 1988, Seiten 1601-1602.

Gemäß weiterer vorteilhafter Verfahrensausgestaltung ist vorgesehen, daß eine Druckausgleichsvorrichtung mit mindestens einer Membrane als Filtermedium in das Trägerteil ein- oder angespritzt wird.

In bevorzugter Weise wird der Formkörper des Verschlußelements beim Umspritzvorgang mit einer derartigen Außenkontur versehen, daß das Verschlußelement ein Einpreß- oder Einschnappteil zum Verschließen einer entsprechenden Gehäuse- oder Behälteröffnung bildet.

Da der resultierende Formkörper des Verschlußelements praktisch aus einem weichen thermoplastischen Kunststoff besteht, wird gewährleistet, daß das Verschlußelement bzw. das durch dieses gebildete Einpreß- oder Einschnappteil die erforderliche äußere Dichtungskontur für das Verschließen einer komplementären Gehäuse- oder Behälteröffnung oder dgl. aufweist. Beispielsweise gewährleistet die weiche Kunststoffkomponente ein wasserdichtes Abschließen eines Behälters oder dergleichen, während die harte Kunststoffkomponente die Membrane fixiert und sicherstellt, daß diese ihre Form beibehält.

Gemäß weiterer vorteilhafter Verfahrensausgestaltung ist vorgesehen daß das Filtermedium im wesentlichen eben oder flach ausgebildet wird.

Darüberhinaus kann vorgesehen sein, daß das Filtermedium im wesentlichen gekrümmt, insbesondere kalottenförmig ausgebildet wird.

In bevorzugter Weise wird für die Membrane der Druckausgleichsvorrichtung ein Material verwendet, welches ausgewählt ist aus einer Gruppe der folgenden gesinterten oder ungesinterten Materialien: Polypropylen, Polyester, Polyamid, Polyether, Polytetrafluorethylen (PTFE), Polysulfon, Ethylen-Tetratluorethylen-Copolymer, fluoriertes Ethylenpropylen (FEP) und Tetrafluorethylen-/Perfluor-(Propylvinyl)-Ether-Copolymer (PFA).

Für bestimmte Anwendungsfälle ist es besonders vorteilhaft, wenn als Membrane der Druckausgleichsvorrichtung eine solche verwendet wird, die aus einem gereckten mikroporösen Polytetrafluorethylen (PTFE) besteht.

Mit besonderen Vorteilen wird eine Membrane verwendet, die eine Dicke im Bereich von 1 bis 2000 µm aufweist, vorzugsweise eine Dicke im Bereich von 1 bis 100 µm.

Darüber hinaus wird in bevorzugter Weise eine Membrane verwendet, deren Porengröße im Bereich von 0,01 µm bis 20 µm, vorzugsweise im Bereich von 0,01 µm bis 5 µm liegt.

Wie bereits erwähnt, weist die Druckausgleichsvorrichtung mindestens eine Membrane als Filtermedium auf, d. h., eine solche Druckausgleichsvorrichtung kann eine oder mehrere Membranen als Filtermedien aufweisen, wobei es besonders günstig sein kann, wenn mindestens eine der Membranen mit einem adsorbierenden Material oder einem Katalysator gefüllt oder beschichtet ist.

So kann beispielsweise als Filtermedium mindestens eine Membrane verwendet werden; die mit Aktivkohle als adsorbierendem Material gefüllt oder beschichtet ist.

Beispielsweise kann aber auch als Filtermedium mindestens eine Membrane verwendet werden, die mit Titandioxid (TiO$_2$) als Katalysator gefüllt oder beschichtet ist.

Eine weitere vorteilhafte Weiterbildung des erfindungsgemäßen Verfahrens kann darin bestehen, daß eine Membrane verwendet wird, die laminiert ist, insbesondere eine Membrane, die auf mindestens eine Trägermaterialschicht laminiert ist.

Gemäß einer weiteren vorteilhaften Verfahrensausgestaltung wird als Trägermaterialschicht, auf welches die Membrane laminiert ist, ein Vliess, ein Gewebe, ein Gewirke, eine Lochplatte oder ein Gitter verwendet.

Mit ganz besonderen Vorteilen wird für die Trägermaterialschicht ein Material verwendet, daß aus einer Gruppe ausgewählt ist, welche die folgenden gesinterten oder ungesinterten Materialien enthält: Polypropylen, Polyester, Polyamid, Polyether, Polytetrafluorethylen (PTFE), Polysulfon, Ethylen-Tetrafluorethylen-Copolymer, fluoriertes Ethylenpropylen (FEP), Tetrafluorethylen-/Perfluor(Propylvinyl)-Ether-Copolymer (PFA); unbeschichtetes Metall und beschichtetes Metall.

Darüberhinaus kann es in Abhängigkeit von dem jeweiligen speziellen Anwendungsfall vorteilhaft sein, wenn die Trägermaterialschicht einseitig oder beidseitig auf die Membrane aufgebracht wird, oder alternativ hierzu, wenn die Membrane einseitig oder beidseitig auf die Trägermaterialschicht aufgebracht wird.

Insbesondere kann die Membrane auf mindestens eine Schicht laminiert werden, die ein adsorbierendes Material oder einen Katalysator enthält.

Als Katalysator für die Membrane bzw. die Schicht, auf welche die Membrane laminiert ist, können vorzugsweise folgende Stoffe zur Anwendung gelangen: Metalle, Oxide, Sulfide und ungelöste molekulare Komplexe. Beispielsweise kann beim Transport von Gefahrengut ein entsprechend ausgewählter Katalysator toxische Dämpfe neutralisieren.

Eine weitere vorteilhafte Ausgestaltung des erfindungsgemäßen Verfahrens kann darin bestehen, daß für die Druckausgleichsvorrichtung ein Filtermedium bzw. eine Membrane verwendet wird, welches bzw. welche oleophob ist.

Insbesondere kann eine Membrane verwendet werden, die einen Ölabweisungsgrad von größer/gleich 4, vorzugsweise einen Ölabweisungsgrad von größer/gleich 8 nach AATCC-Testmethode 118-1989 ASTM aufweist.

Im Zusammenhang mit dem Begriff "Ölabweisungsgrad" wird im folgenden zunächst eine praktikable Methode zur Bestimmung des Ölabweisungsgrades oleophober poröser Körper beschrieben.

Titel:
Kohlenwasserstoff-Benetzungstest Ölwerttest
Beschreibung:
Unter Verwendung verschiedener Kohlenwasserstoffe wird der Ölabweisungsgrad von porösen Prüfkörpern, meist Membranen und Laminaten, bestimmt.
Referenzdokument:
AATCC Test Method 118-1989 ASTM Handbook of Fiber Science and Technology; Volume II

Chemical Processing of Fibers and Fabrics Functional Finishes
Part B
1984 Marcel Dekker, INC.

Prüfmittel:

Testflüssigkeiten mit einer Oberflächenspannung bei 25°C:

#1 Nujol
31,2 dyn/cm
#2 65:35 Nujol:n-Hexadekan (Vol.%)
28,7 dyn/cm
#3 n-Hexadekan
27,1 dyn/cm
#4 n-Tetradekan
26,1 dyn/cm
#5 n-Dodekan
25,1 dyn/cm
#6 n-Dekan
23,5 dyn/cm
#7 n-Oktan
21,3 dyn/cm
#8 n-Heptan
19,8 dyn/cm
#9 n-Hexan
18,4 dyn/cm

Prüfkörper:
Poröse Körper, Membranen, Laminate Schläuche;

PRÜFMETHODE:

Von den obengenannten Testflüssigkeiten mit unterschiedlichen Oberflächenspannungen werden Tropfen auf den Prüfkörper geträufelt und beobachtet.

Liegt die Oberflächenenergie des Prüfkörpers unterhalb der der Testflüssigkeit, kann der Tropfen nicht in die poröse Struktur des Prüfkörpers eindringen.

Physikalischer Hintergrund für die Benetzung:
Ein Maß für die Benetzung eines Körpers mit einer Flüssigkeit ist der Randwinkel $\theta$ des Flüssigkeitstropfens auf der Oberfläche des Prüfkörpers.

Ist der Randwinkel 0°, wird der Prüfkörper völlig von der Flüssigkeit benetzt, d. h. die Flüssigkeit dringt in den Prüfkörper ein.

Siehe Fig. 4 zur Definition von Cos $\theta$.

$$\cos\theta = \frac{\sigma_{SV} - \sigma_{SL}}{\sigma_{LV}} \text{, worin}$$

$\sigma_{SV}$ = Oberflächenspannung fest-dampfförmig
$\sigma_{SL}$ = Oberflächenspannung fest-flüssig
$\sigma_{LV}$ = Oberflächenspannung flüssig-dampfförmig

Bei porösen Membranen läßt sich eine Benetzung durch eine Flüssigkeit leicht erkennen. Die benetzte Stelle wird transparent oder dunkel.

Die Tropfengröße soll ca. 4 - 6 mm im Durchmesser betragen. Die Prüfung soll bei Raumtemperatur, 21°C ± 1°C, durchgeführt werden.

Das erfindungsgemäße Verfahren zur Herstellung eines Verschlußelements in Form eines Kunststoff-Spritzgußteils weist insbesondere die folgenden Vorteile auf:

Das Verschlußelement kann mit Hilfe desselben Mehrkomponenten-Spritrgußverfahrens, insbesondere Zweikomponenten-Spritzgußverfahren, komplett gefertigt und gleichzeitig mit dem Filtermedium als Interface zwischen den Räumen innerhalb und außerhalb eines zu verschließenden Gehäuses oder dergleichen versehen werden, so daß letztendlich der Fertigungsaufwand und die hiermit verbundenen Kosten wesentlich herabgesetzt werden können.

Aufgrund des erfindungsgemäßen Herstellungsverfahrens bleibt das Filtermedium, insbesondere die Druckausgleichsvorrichtung mit mindestens einer Membrane als Filtermedium, in dem Trägerteil aus dem harten thermoplastischen Kunststoff stabil gefaßt oder gerahmt, so daß das Filtermedium bei der weiteren Montage des Verschlußelements nicht verformt oder beschädigt wird.

Auf der anderen Seite ist gewährleistet, daß der resultierende, äußere Formkörper des Verschlußelements, welcher erfindungsgemäß dadurch hergestellt wird, daß das Trägerteil mit einem weichen thermoplastischen Kunststoff als zweite Materialkomponente umspritzt wird, durch das Trägerteil aus dem harten thermoplastischen Kunststoff als erste Materialkomponente fester an die Dichtflächen der zu verschließenden, komplementären Gehäuseöffnung oder dergleichen gedrückt wird. Infolgedessen ist die Abdichtung durch das Verschlußelement gegenüber Wasser, Staub und dergleichen wesentlich verbessert.

Wie bereits erwähnt, stellt das erfindungsgemäße Verfahren einen außerordentlich ökonomischen Herstellungsprozeß dar, d. h. das zu fertigende Verschlußelement braucht während der Fertigung nicht durch aufwendige Zwischenschritte in andere Maschinen oder Vorrichtungen eingelegt werden, wie dies sonst erforderlich ist.

Schließlich ist es bei dem erfindungsgemäßen Herstellungsverfahren auch möglich, das Verschlußelement aus drei oder aus mehreren, unterschiedlichen thermoplastischen Materialkomponenten mit Hilfe eines entsprechenden Mehrkomponenten-Spritzgußverfahrens zu fertigen.

Der vorliegenden Erfindung liegt auch die Aufgabe zugrunde, ein verbessertes Verschlußelement in Form eines Kunststoff-Spritzgußteils zum abgedichteten, lösbaren Verschließen einer in einem Gehäuse, Behälter oder dgl. ausgebildeten komplementären Öffnung zu schaffen, wobei in dieses Verschlußelement ein Filtermedium als Interface zwischen den Räumen innerhalb und außerhalb des Gehäuses oder dgl. integriert ist. Hierbei wird insbesondere gefordert, daß dieses Verschlußelement bei insgesamt einfacherer Ausbildung fertigungstechnisch vorteilhaft herzustellen ist, so daß letztendlich die Fertigungskosten für derartige Verschlußelemente herabgesetzt werden könnten.

Diese Aufgabe wird gemäß der vorliegenden Erfindung dadurch gelöst, daß das Filtermedium in ein Trägerteil aus wenigstens einer ersten thermoplastischen Materialkomponente ein- oder angespritzt ist und das Trägerteil mit wenigstens einer zweiten, hinsichtlich ihrer Konsistenz (bzw. Härte) gegenüber der ersten Materialkomponente unterschiedlichen thermoplastischen Materialkomponente zur Bildung des resultierenden Formkörpers des Verschlußelements umspritzt ist.

In bevorzugter Weise bestehen das Trägerteil aus einem harten thermoplastischen Kunststoff als erste Materialkomponente und der resultierende Formkörper des Verschlußelements aus einem weichen thermoplastischen Kunststoff als zweite Materialkomponente.

Als besonders günstig hat es sich herausgestellt, wenn das Trägerteil aus einem harten thermoplastischen Kunststoff besteht, der aus einer Gruppe ausgewählt ist, die enthält: Polybutylenterephthalat (PBTP), Polyoxymethylen (POM), Polyethlyen (PE), Ultradur®, Delriu®, Ultramed®, verstärkte Kunststoffe, insbesondere mit Glasfasern verstärkte bzw. gefüllte Kunststoffe; und wenn ferner der resultierende Formkörper des Verschlußelements aus einem weichen thermoplastischen Kunststoff besteht, der aus einer Gruppe ausgewählt ist, die enthält: thermoplastische Elastomere (TPE), insbesondere Santoprene®, Alcryn®, Hytrel®, Geolast®, Thermolast K®. Vorzugsweise weist das thermoplastische Elastomer (TPE) für den resultierenden Formkörper eine Shore-Härte im Bereich von ca. 40 Shore A bis ca. 80 Shore D auf.

Mit besonderem Vorteil ist eine Druckausgleichsvorrichtung mit mindestens einer Membrane als Filtermedium in das Trägerteil des Verschlußelements ein- oder angespritzt.

Darüberhinaus kann vorzugsweise der Formkörper des Verschlußelements mit einer derartigen Außenkontur versehen sein, daß das Verschlußelement ein Einpreß- oder Einschnappteil zum Verschließen einer Gehäuseöffnung oder dergleichen bildet.

Im übrigen kann das erfindungsgemäße Verschlußelement im Bedarfsfall auch in Form einer Verschlußkappe oder Schraubkappe ausgebildet sein.

Das Filtermedium, insbesondere die Membrane der Druckausgleichsvorrichtung, kann z. B. im wesentlichen eben oder flach oder im wesentlichen gekrümmt, insbesondere kalottenförmig ausgebildet sein.

In bevorzugter Weise besteht die Membrane der Druckausgleichsvorrichtung aus einem Material, welches ausgewählt ist aus einer Gruppe der folgenden gesinterten oder ungesinterten Materialien: Polypropylen, Polyester, Polyamid, Polyether, Polytetrafluorethylen (PTFE), Polysulfon, Ethylen-Tetrafluorethylen-Copolymer, fluoriertes Ethylenpropylen (FEP) und Tetrafluorethylen-/Perfluor(Propylvinyl)-Ether-Copolymer (PFA).

In bestimmten Anwendungsfällen ist es besonders vorteilhaft, wenn die Membrane der Druckausgleichsvorrichtung aus einem gereckten mikroporösen Polytetrafluorethylen (PTFE) besteht.

Die Membrane wird in jedem Falle eine Dicke im Bereich von 1 bis 2000 µm aufweisen, vorzugsweise im Bereich von 1 bis 100 µm.

Ferner wird die Membrane der Druckausgleichsvorrichtung vorzugsweise eine Porengröße im Bereich von 0,01 µm bis 20 µm, insbesondere im Bereich von 0,01 µm bis 5 µm aufweisen.

Wie bereits erwähnt, kann die Druckausgleichsvorrichtung eine oder mehrere Membranen aufweisen, wobei es besonders günstig sein kann, wenn mindestens eine der Membranen mit einem adsorbierenden Material oder einem Katalysator gefüllt oder beschichtet ist.

Eine weitere vorteilhafte Ausgestaltung des erfindungsgemäßen Verschlußelements kann darin bestehen, daß die Membrane laminiert ist, beispielsweise, daß die Membrane auf mindestens eine Trägermaterialschicht laminiert ist.

In jedem Falle besteht die Trägermaterialschicht für die Laminierung vorzugsweise aus einem Vliess, einem Gewebe, einem Gewirke, einer Lochplatte oder aus einem Gitter.

Das Material für diese Trägermaterialschicht kann darüberhinaus aus einer Gruppe ausgewählt sein, welches die folgenden gesinterten oder ungesinterten Materialien enthält: Polypropylen, Polyester, Polyamid, Polyether, Polytetrafluorethylen (PTFE), Polysulfon, Ethylen-Tetrafluorethylen-copolymer (z. B. Tefzel$^R$), fluoriertes Ethylenpropylen (FEP) und Tetrafluorethylen-/Perfluor(Propylvinyl)-Ether-Copolymer (PFA), unbeschichtetes Metall und beschichtetes Metall.

Darüberhinaus kann es, in Abhängigkeit von dem speziellen Anwendungsfall, günstig sein, daß die Trägermaterialschicht einseitig oder beidseitig auf die Membrane aufgebracht ist, oder alternativ hierzu, daß die Membrane einseitig oder beidseitig auf die Trägermaterialschicht aufgebracht ist.

Insbesondere kann die Membrane auf mindestens eine Schicht laminiert sein, die ein adsorbierendes Material oder einen Katalysator enthält.

Als Katalysator können folgende Stoffe zur Anwendung kommen: Metalle, Oxide, Sulfide und ungelöste molekulare Komplexe. Beispielsweise kann beim Transport von Gefahrengut ein entsprechend ausgewählter Katalysator toxische Dämpfe neutralisieren.

Eine weitere vorteilhafte Ausgestaltung des erfindungsgemäßen Verschlußelements besteht darin, daß die Membrane der Druckausgleichsvorrichtung oleophob ist.

Insbesondere kann eine solche oleophobe Membrane einen Ölabweisungsgrad von größer/gleich 4, vorzugsweise einen Ölabweisungsgrad von größer/gleich 8 nach AATCC-Testmethode 118-1989 ASTM aufweisen. Auf die bereits oben erläuterte Methode zur Bestimmung des Ölabweisungsgrades oleophober poröser Körper wird Bezug genommen.

Zur näheren Erläuterung der vorliegenden Erfindung, ihrer weiterer Merkmale und Vorteile dient die nachfolgende Beschreibung von Ausführungsbeispielen unter Bezugnahme auf die Zeichnungen. Dabei zeigen:

Figur 1 eine schematische Axialschnittansicht eines Verschlußelements mit einer Druckausgleichsvorrichtung;

Figur 2 eine Draufsicht auf das Verschlußelement gemäß Figur 1 von unten (mit der als durchsichtig gedachten Zeichenebene);

Figur 3 eine abgewandelte Ausführungsform eines Verschlußelements gemäß einer teilweisen axialen Schnittansicht; und

Figur 4 eine graphische Darstellung zur Definition von Cosinus θ, wobei der Randwinkel θ ein Maß für die Benetzung eines Körpers mit einer Flüssigkeit ist.

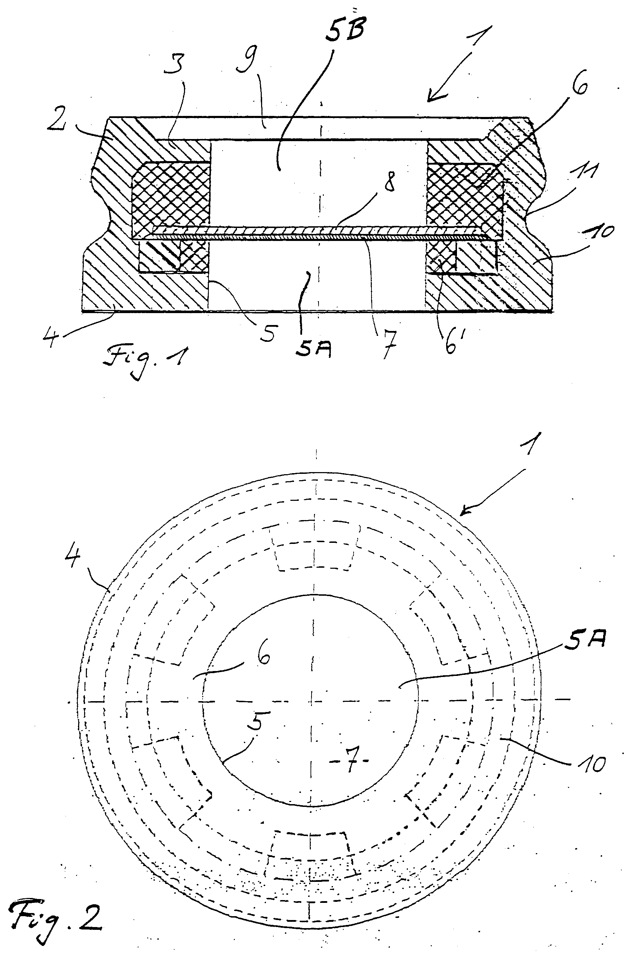

In den Zeichnungen beziehen sich die Figuren 1 und 2 auf ein erstes Ausführungsbeispiel eines Verschlußelements 1 zum abgedichteten, lösbaren Verschließen einer in einem (nicht gezeigten) Gehäuse oder Behälter oder dgl. ausgebildeten komplementären, runden Öffnung. Bei einem solchen Behälter kann es sich beispielsweise um einen Behälter handeln, der mit einer Flüssigkeit oder einem Feststoff, z. B. einem pulverförmigen Feststoff, befüllbar ist und der entlüftet werden muß. Das Verschlußelement 1 ist im Ausführungsbeispiel gemäß Figuren 1 und 2 als ein Einpreß- oder Einschnappteil ausgebildet, und besteht im wesentlichen aus einem Formkörper 10 mit einem im wesentlichen zylindrischen Wandungsteil 2, einem mit dem Wandungsteil 2 einstückig verbundenen Oberteil 3 und einem mit dem Wandungsteil 2 einstückig verbundenen Unterteil 4.

Im Bereich des mittleren Außenumfangs des Wandungsteils 2 des Verschlußelements 1 ist eine umlaufende Ringnut 11 ausgebildet, die praktisch eine Einbuchtung in diesem Bereich des Wandungsteils 2 bildet, um hierdurch das Verschlußelement 1 in abgedichteter Weise auf einen kreisförmigen Rand einer in einem (nicht dargestellten) Gehäuse ausgebildeten Öffnung oder dgl. pressen zu können, derart, daß dieser Öffnungsrand gleichsam in die Ringnut 11 elastisch hineinschnappen kann.

Hierdurch wird ein fester, abgedichteter Sitz für das Verschlußelement 1 gebildet.

In das Verschlußelement 1 ist ferner ein Filtermedium als Interface zwischen den Räumen innerhalb und außerhalb des Gehäuses, dessen Öffnung zu verschließen ist, integriert.

Im gezeigten Ausführungsbeispiel ist als Filtermedium eine Druckausgleichsvorrichtung mit mindestens einer Membrane 7 vorgesehen. Hierbei handelt es sich insbesondere um eine gasdurchlässige, jedoch flüssigkeitsundurchlässige Membrane, welche den erforderlichen Druckausgleich ermöglicht, wobei die Membrane 7 auf eine Trägermaterialschicht 8 laminiert ist, die noch weiter unten erläutert wird.

Bei dem nach der Erfindung ausgebildeten Verschlußelement 1 ist vorgesehen, daß das Filtermedium zunächst in ein Trägerteil 6 ein- oder angespritzt wird, das aus wenigstens einer ersten thermoplastischen Materialkomponente besteht. Insbesondere besteht das Trägerteil 6 aus einem harten thermoplastischen Kunststoff, der z. B. aus der Gruppe der folgenden ausgewählt ist: Polybutylenterephthalat (PBTP), Polyoxymethylen (POM), Polyethylen (PE), Ultradur®, Delriu®, Ultramed®, verstärkte Kunststoffe, insbesondere mit Glasfasern verstärkte bzw. gefüllte Kunststoffe.

Ferner ist das Trägerteil 6 mit wenigstens einer zweiten, hinsichtlich ihrer Konsistenz gegenüber der ersten Materialkomponente unterschiedlichen thermoplastischen Materialkomponente umspritzt, um hierdurch den resultierenden, äußeren Formkörper 10 des Verschlußelements 1 zu bilden. In bevorzugter Weise besteht der Formkörper 10 aus einem weichen thermoplastischen Kunststoff als zweiter Materialkomponente, wobei dieser weiche thermoplastische Kunststoff vorzugsweise aus der Gruppe der folgenden ausgewählt ist: thermoplastische Elastomere (TPE), vorzugsweise Santoprene®, Alcryn®, Hytrel®, Geolast® und Thermolast K®.

Deartige thermoplastische Elastomere weisen in typischer Weise Shore-Härten im Bereich von ca. 40 Shore A bis ca. 80 Shore D auf.

Die Herstellung eines derartigen Verschlußelements erfolgt unter Anwendung eines Zweikomponenten-Spritzgußverfahrens, in der Weise, daß zunächst das Filtermedium (insbesondere die Membrane 7) in das Trägerteil 6 aus dem harten thermoplastischen Kunststoff eingespritzt wird und anschließend dieses Trägerteil 6 mit einem weichen thermoplastischen Kunststoff in der Weise umspritzt wird, daß sich der resultierte Formkörper 10 ergibt. Bei diesem Umspritzvorgang wird gleichzeitig der Formkörper 10 mit der umlaufenden Ringnut 11 versehen, um das Verschlußelement 1 in Form eines Einpreß- oder Einschnappteils zu erzeugen.

Innerhalb des Wandungsteils 2 des Verschlußelements 1 ist eine im wesentlichen zylindrische Innenbohrung 5 ausgebildet, die in Axialrichtung gesehen durch das hierzu quer verlaufende Filtermedium 7, 8 gleichsam in zwei Räume unterteilt wird, von denen ein erster Raum 5A mit dem Innenraum des Gehäuses oder dgl. in Verbindung steht, während der zweite Raum 5B oberhalb des Filtermediums über eine obere Öffnung 9 des Verschlußelements 1 mit dem Außenraum in Verbindung steht. Der Druckausgleich erfolgt somit z. B. vom Innenraum zum Außenraum (Atmosphäre) über die in das Trägerteil 6 ein- oder angespritzte Druckausgleichsvorrichtung in Form wenigstens einer Membran 7, die im Ausführungsbeispiel gemäß Figur 1 auf ein Trägermaterial laminiert ist, wobei es sich bei dem Trägermaterial beispielsweise um eine Schicht 8 handelt, die z. B. ein Vliess, ein Gewebe, ein Gewirke, eine Lochplatte oder ein Gitter sein kann.

Die für die Membrane 7 geeigneten Materialien umfassen gesintertes Polypropylen, ungesintertes Polypropylen, Polyester, Polyamid, Polyether, Polytetrafluorethylen (PTFE), Polysulfon, Ethylen-Tetrafluorethylen-Copolymer, fluoriertes Ethylenpropylen (FEP) und Tetrafluorethylen-/Perfluor-(Propylvinyl)-Ether-Copolymer (PFA).

In bevorzugter Weise wird für die Membrane 7 ein gerecktes mikroporöses Polytetrafluorethylen verwendet.

Im gezeigten Ausführungsbeispiel ist die Trägermaterialschicht 8 einseitig auf die Membrane 7 aufgebracht. Es besteht aber auch die Möglichkeit, daß eine solche Trägermaterialschicht 8 beidseitig auf die Membrane 7 aufgebracht wird.

Es ist ferner möglich, daß Membranen beidseitig auf die Trägermaterialschicht aufgebracht sind. Dadurch können Membranen mit unterschiedlichen Eigenschaften in einem Verschlußelement, z. B. einer Verschlußkappe, eingebaut sein. Beispielsweise kann hierbei die eine Membrane eine sehr hohe Abriebfestigkeit gewährleisten, während die andere Membrane hydrophob ausgerüstet sein kann. Schließlich ist aber auch die Verwendung von mehreren Membranen sowie von mehreren Trägermaterialschichten denkbar, welche jeweils mehrlagig angeordnet sind.

Wie bereits oben erwähnt, ist die Druckausgleichsvorrichtung in Form der Membran 7 und der Trägermaterialschicht 8 in das Trägerteil 6 ein- oder angespritzt, wobei das Trägerteil 6 einen unterhalb der Membran 7 befindlichen unteren Trägerteilbereich 6' aufweist.

Darüberhinaus läßt sich in bestimmten Anwendungsfällen eine oleophobe Membrane 7 verwenden, d. h. eine Membrane, die einen Ölabweisungsgrad von größer/gleich 4, insbesondere einen Ölabweisungsgrad von größer/gleich 8 aufweist (nach AATCC-Testmethode 118-1989 ASTM, wie bereits weiter oben erläutert).

Im Falle eines Ölabweisungsgrades von 8 bedeutet dies, daß Flüssigkeiten mit einer Oberflächenspannung von 20 mN/m bzw. dyn/cm die poröse Membrane 7 nicht mehr benetzen.

Beispiele für oleophobe Membranen können den folgenden Druckschriften entnommen werden: EP-A-0 587 988 (vgl. insbesondere Seite 5, 1. Absatz) und EP-A-0 615 779 (vgl. insbesondere dortige Tabelle 1, Seiten 7 - 8).

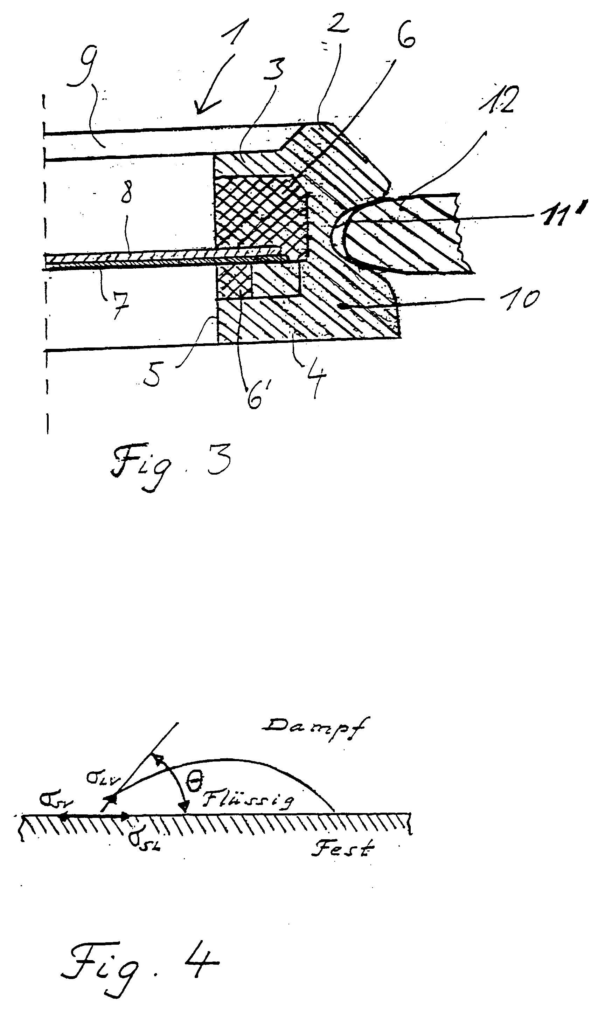

Die abgewandelte Ausführungsform eines Verschlußelements 1 gemäß Figur 3 unterscheidet sich gegenüber der Ausführungsform nach Figur 1 lediglich dadurch, daß die Außenkontur des Formkörpers 10 mit einer vertieften Ringnut 11' ausgebildet ist, die beim Umspritzvorgang erzeugt wird und die dazu dient, einen entsprechenden vorspringenden Rand 12 einer zu verschließenden Gehäuseöffnung in abgedichteter Weise aufzunehmen, wenn diese Gehäuseöffnung mit den Verschlußelement 1 verschlossen wird.

Verschlußelemente gemäß der vorliegenden Erfindung lassen sich sehr häufig in Gehäusen zum Schutze von Elektronik oder empfindlicher Mechanik einsetzen, die Klimaschwankungen, insbesondere Temperatur- und Feuchtigkeitsänderungen unterworfen sind und die z. B. Schutzarten nach DIN 40 050 genügen müssen bzw. vor allem wasserdicht sein müssen.

Gehäuse der erläuterten Art sind beispielsweise für Steuergeräte in der Automobiltechnik erforderlich, als elektronische Boxen oder Gehäuse für Außenbereiche, für Antennenverstärker und dgl. mehr, darüberhinaus aber auch z. B. für Sensoren oder als Gehäuse oder Behälter mit Filtern zur Phasentrennung oder Flüssigkeitsfiltration bzw. Gasfiltration.

Bezugszeichenliste:

| 1 | Verschlußelement |
|---|---|
| 2 | Wandlungsteil |
| 3 | Oberteil |
| 4 | Unterteil |
| 5 | Innenbohrung |
| 5A | erster Raum |
| 5B | zweiter Raum |
| 6 | Trägerteil |
| 6' | unterer Trägerteilbereich |
| 7 | Membrane |
| 8 | Schicht (Trägermaterial) |
| 9 | obere Öffnung |
| 10 | Formkörper |
| 11 | Ringnut |
| 11' | Ringnut |
| 12 | Rand einer Gehäuseöffnung |

**Patentansprüche**

1. Verfahren zur Herstellung eines Verschlußelements in Form eines Kunststoff-Spritzgußteils zum abgedichteten, lösbaren Verschließen einer in einem Gehäuse, Behälter oder dgl. ausgebildeten komplementären Öffnung, wobei in das Verschlußelement wenigstens ein Filtermedium als Interface zwischen den Räumen innerhalb und außerhalb des Gehäuses oder dgl. integriert wird, dadurch gekennzeichnet, daß unter Anwendung eines Mehrkomponenten-Spritzgußverfahrens zunächst das Filtermedium in ein Trägerteil aus wenigstens einer ersten thermoplastischen Materialkomponente ein- oder angespritzt wird und anschließend das Trägerteil mit wenigstens einer zweiten, hinsichtlich ihrer Konsistenz gegenüber der ersten Komponente unterschiedlichen thermoplastischen Materialkomponente zur Bildung eines resultierenden Formkörpers des Verschlußelementes umspritzt wird.

2. Verfahren nach Anspruch 1, dadurch gekennzeichnet, daß für das Trägerteil ein "harter" thermoplastischer Kunststoff als erste Materialkomponente und für den resultierenden Formkörper des Verschlußelements ein "weicher" thermoplastischer Kunststoff als zweite Materialkomponente verwendet werden.

3. Verfahren nach Anspruch 2, dadurch gekennzeichnet, daß ein harter thermoplastischer Kunststoff verwendet wird, der aus einer Gruppe ausgewählt ist, die enthält: Polybutylenterephthalat (PBTP), Polyoxymethylen (POM), Polyethylen (PE), Ultradur ®, Delriu®, Ultramed®, verstärkte Kunststoffe, insbesondere mit Glasfasern verstärkte bzw. gefüllte Kunststoffe.

4. Verfahren nach Anspruch 2, dadurch gekennzeichnet, daß ein weicher thermoplastischer Kunststoff verwendet wird, der aus einer Gruppe ausgewählt ist, die enthält: thermoplastische Elastomere (TPE), insbesondere Santoprene®, Alcryn®, Hytrel®, Geolast®, Thermolast K®.

5. Verfahren nach Anspruch 4, dadurch gekennzeichnet, daß ein thermoplastisches Elastomer (TPE) mit einer SHORE-Härte im Bereich von ca. 40 SHORE A bis ca. 80 SHORE D verwendet wird.

6. Verfahren nach einem der Ansprüche 1 bis 5, dadurch gekennzeichnet, daß eine Druckausgleichsvorrichtung mit mindestens einer Membrane als Filtermedium in das Trägerteil ein- und angespritzt wird.

7. Verfahren nach einem der Ansprüche 1 bis 6, dadurch gekennzeichnet, daß der Formkörper des Verschlußelements beim Umspritzvorgang mit einer derartigen Außenkontur versehen wird, daß das Verschlußelement ein Einpreß- oder Einschnappteil zum Verschließen einer Gehäuseöffnung oder dgl. bildet.

8. Verfahren nach einem der Ansprüche 1 bis 7, dadurch gekennzeichnet, daß das Filtermedium im wesentlichen eben oder flach ausgebildet wird.

9. Verfahren nach einem der Ansprüche 1 bis 7, dadurch gekennzeichnet, daß das Filtermedium im wesentlichen gekrümmt, insbesondere kalottenförmig ausgebildet wird.

10. Verfahren nach einem der Ansprüche 6 bis 9, dadurch gekennzeichnet, daß für die Membrane der Druckausgleichsvorrichtung ein Material verwendet wird, welches ausgewählt ist aus einer der Gruppe der folgenden gesinterten oder ungesinterten Materialien: Polypropylen, Polyester, Polyamid, Polyether, Polytetrafluorethylen (PTFE), Polysulfon, Ethylen-Tetrafluorethylen-Copolymer, fluoriertes Ethylenpropylen (FEP) und Tetrafluorethylen-/Perfluor(Propylvinyl)-Ether-Copolymer (PFA).

11. Verfahren nach Anspruch 10, dadurch gekennzeichnet, daß als Membrane der Druckausgleichsvorrichtung eine solche verwendet wird, die aus einem gereckten mikroporösen Polytetrafluorethylen (PTFE) besteht.

12. Verfahren nach einem der Ansprüche 6 bis 11, dadurch gekennzeichnet, daß eine Membrane verwendet wird, die eine Dicke im Bereich von 1 bis 2000 μm aufweist.

13. Verfahren nach Anspruch 12, dadurch gekennzeichnet, daß eine Membrane verwendet wird, die eine Dicke im Bereich von 1 bis 100 μm aufweist.

14. Verfahren nach einem der Ansprüche 6 bis 13, dadurch gekennzeichnet, daß eine Membrane verwendet wird, deren Porengröße im Bereich von 0,01μm bis 20μm, vorzugsweise im Bereich von 0,01μm bis 5μm, liegt.

15. Verfahren nach einem der Ansprüche 6 bis 14, dadurch gekennzeichnet, daß mindestens eine Membrane verwendet wird, die mit einem adsorbierenden Material oder einem Katalysator gefüllt oder beschichtet ist.

16. Verfahren nach einem der Ansprüche 6 bis 15, dadurch gekennzeichnet, daß eine Membrane verwendet wird, die laminiert ist.

17. Verfahren nach Anspruch 16, dadurch gekennzeichnet, daß eine Membrane verwendet wird, die auf mindestens eine Trägermaterialschicht laminiert ist.

18. Verfahren nach Anspruch 17, dadurch gekennzeichnet, daß als Trägermaterialschicht ein Vliess, ein Gewebe, ein Gewirke, eine Lochplatte oder ein Gitter verwendet wird.

19. Verfahren nach Anspruch 17 und 18, dadurch gekennzeichnet, daß für die Trägermaterialschicht ein Material verwendet wird, das aus einer Gruppe ausgewählt ist, welche die folgenden gesinterten oder ungesinterten Materialien enthält: Polypropylen, Polyester, Polyamid, Polyether, Polytetrafluorethylen (PTFE), Polysulfon, Ethylen-Tetrefluorethylen-Copolymer, fluoriertes Ethylenpropylen (FEP), Tetrafluorethylen-/Perfluor(Propylvinyl)-Ether-Copolymer (PFA); unbeschichtetes Metall und beschichtetes Metall.

20. Verfahren nach einem der Ansprüche 17 bis 19, dadurch gekennzeichnet, daß die Trägermaterialschicht einseitig oder beidseitig auf die Membrane aufgebracht wird.

21. Verfahren nach einem der Ansprüche 17 bis 19, dadurch gekennzeichnet, daß die Membrane einseitig oder beidseitig auf die Trägermaterialschicht aufgebracht wird.

22. Verfahren nach einem der Ansprüche 16 bis 21, dadurch gekennzeichnet, daß die Membrane auf mindestens eine Schicht laminiert wird, die ein adsorbierendes Material oder einen Katalysator enthält.

23. Verfahren nach einem der Ansprüche 6 bis 22, dadurch gekennzeichnet, daß eine Membrane verwendet wird, welche oleophob ist.

24. Verfahren nach einem der Ansprüche 6 bis 22, dadurch gekennzeichnet, daß eine Membrane verwendet wird, die einen Ölabweisungsgrad von größer/gleich 4 nach AATCC-Testmethode 118-1989 ASTM aufweist.

25. Verfahren nach einem der Ansprüche 6 bis 22, dadurch gekennzeichnet, daß eine Membrane verwendet wird, die einen Ölabweisungsgrad von größer/gleich 8 nach AATCC-Testmethode 118-1989 ASTM aufweist.

26. Verschlußelement (1) in Form eines Kunststoff-Spritzgußteils zum abgedichteten, lösbaren Verschließen einer in einem Gehäuse, Behälter oder dergleichen ausgebildeten komplementären Öffnung, wobei in das Verschlußelement ein Filtermedium als Interface zwischen den Räumen innerhalb und außerhalb des Gehäuses oder dgl. integriert ist, dadurch gekennzeichnet, daß das Filtermedium in ein Trägerteil (6) aus wenigstens einer ersten thermoplastischen Materialkomponente ein- oder angespritzt ist und daß das Trägerteil (6) mit wenigstens einer zweiten, hinsichtlich ihrer Konsistenz gegenüber der ersten Komponente unterschiedlichen thermoplastischen Materialkomponente zur Bildung eines resultierenden Formkörpers (10) des Verschlußelementes (1) umspritzt ist.

27. Verschlußelement nach Anspruch 26, dadurch gekennzeichnet, daß das Trägerteil (6) aus einem harten thermoplastischen Kunststoff als erste Materialkomponente besteht und der resultierende Formkörper (10) des Verschlußelements (1) aus einem weichen thermoplastischen Kunststoff als zweite Materialkomponente besteht.

28. Verschlußelement nach Anspruch 27, dadurch gekennzeichnet, daß das Trägerteil (6) aus einem harten thermoplastischen Kunststoff besteht, der aus einer Gruppe ausgewählt ist, die enthält: Polybutylenterephthalat (PBTP), Polyoxymethylen (POM), Polyethylen (PE), Ultradur®, Delriu®, Ultramed®, verstärkte Kunststoffe, insbesondere mit Glasfasern verstärkte bzw. gefüllte Kunststoffe.

29. Verschlußelement nach Anspruch 27, dadurch gekennzeichnet, daß der resultierende Formkörper (10) des Verschlußelements (1) aus einem weichen thermoplastischen Kunststoff besteht, der aus einer Gruppe ausgewählt ist, die enthält: thermoplastische Elastomere (TPE), insbesondere Santoprene®, Alcryn®, Hytrel®, Geolast®, Thermolast K®.

30. Verschlußelement nach Anspruch 29, dadurch gekennzeichnet, daß das thermoplastische Elastomer (TPE) eine SHORE-Härte im Bereich von ca. 40 SHORE A bis ca. 80 SHORE D aufweist.

31. Verschlußelement nach einem der Ansprüche 26 bis 30, dadurch gekennzeichnet, daß eine Druckausgleichsvorrichtung mit mindestens einer Membrane (7) als Filtermedium in das Trägerteil (6) ein- oder angespritzt ist.

32. Verschlußelement nach einem der Ansprüche 26 bis 31, dadurch gekennzeichnet, daß der Formkörper (10) des Verschlußelements (1) mit einer derartigen Außenkontur versehen ist, daß das Verschlußelement (1) ein Einpreß- oder Einschnappteil zum Verschließen einer Gehäuseöffnung oder dgl. bildet.

33. Verschlußelement nach einem der Ansprüche 26 bis 32, dadurch gekennzeichnet, daß das Filtermedium im wesentlichen eben oder flach ausgebildet ist.

34. Verschlußelement nach einem der Ansprüche 26 bis 32, dadurch gekennzeichnet, daß das Filtermedium im wesentlichen gekrümmt, insbesondere kalottenförmig ausgebildet ist.

35. Verschlußelement nach einem der Ansprüche 31 bis 34, dadurch gekennzeichnet, daß die Membrane (7) der Druckausgleichsvorrichtung aus einem Material besteht, welches ausgewählt ist aus einer Gruppe der folgenden gesinterten oder ungesinterten Materialien: Polypropylen, Polyester, Polyamid, Polyether, Polytetrafluorethylen (PTFE), Polysulfon, Ethylen-Tetrafluorethylen-Copolymer, fluoriertes Ethylenpropylen (FEP) und Tetrafluorethylen-/Perfluor(Propylvinyl)-Ether-Copolymer (PFA).

36. Verschlußelement nach Anspruch 35, dadurch gekennzeichnet, daß die Membrane (7) aus einem gereckten mikroporösen Polytetrafluorethylen (PTFE) besteht.

37. Verschlußelement nach einem der Ansprüche 31 bis 36, dadurch gekennzeichnet, daß die Membrane (7) eine Dicke im Bereich von 1 bis 2000 µm aufweist.

38. Verschlußelement nach Anspruch 37, dadurch gekennzeichnet, daß die Membrane (7) eine Dicke im Bereich von 1 bis 100 µm aufweist.

39. Verschlußelement nach einem der Ansprüche 31 bis 38, dadurch gekennzeichnet, daß die Membrane (7) eine Porengröße im Bereich von 0,01µm bis 20µm, vorzugsweise im Bereich von 0,01µm bis 5µm, aufweist.

40. Verschlußelement nach einem der Ansprüche 31 bis 39, dadurch gekennzeichnet, daß mindestens eine Membrane (7) mit einem adsorbierenden Material oder einem Katalysator gefüllt oder beschichtet ist.

41. Verschlußelement nach einem der Ansprüche 31 bis 40, dadurch gekennzeichnet, daß die Membrane (7) laminiert ist.

42. Verschlußelement nach Anspruch 41, dadurch gekennzeichnet, daß die Membrane (7) auf mindestens eine Trägermaterialschicht (8) laminiert ist.

43. Verschlußelement nach Anspruch 42, dadurch gekennzeichnet, daß die Trägermaterialschicht (8) ein Vliess, ein Gewebe, ein Gewirke, eine Lochplatte oder ein Gitter ist.

44. Verschlußelement nach Anspruch 42 oder 43, dadurch gekennzeichnet, daß das Material für die Trägermaterialschicht (8) aus einer Gruppe ausgewählt ist, welche die folgenden gesinterten oder ungesinterten Materialien enthält: Polypropylen, Polyester, Polyamid, Polyether, Polytetrafluorethylen (PTFE), Pulysulfon, Ethylen-Tetrafluorethylen-Copolymer, fluoriertes Ethylenpropylen (FEP), Tetrafluorethylen-/Perfluor-(Propylvinyl)-Ether-Copolymer (PFA); unbeschichtetes Metall und beschichtetes Metall.

45. Verschlußelement nach einem der Ansprüche 42 bis 44, dadurch gekennzeichnet, daß die Trägermaterialschicht (8) einseitig oder beidseitig auf die Membrane (7) aufgebracht ist.

46. Verschlußelement nach einem der Ansprüche 42 bis 44, dadurch gekennzeichnet, daß die Membrane (7) einseitig oder beidseitig auf die Trägermaterialschicht (8) aufgebracht ist.

47. Verschlußelement nach einem der Ansprüche 42 bis 46, dadurch gekennzeichnet, daß die Membrane (7) auf mindestens eine Schicht laminiert ist, die ein adsorbierendes Material oder einen Katalysator enthält.

48. Verschlußelement nach einem der Ansprüche 31 bis 47, dadurch gekennzeichnet, daß die Membrane (7) oleophob ist.

49. Verschlußelement nach einem der Ansprüche 31 bis 48, dadurch gekennzeichnet, daß die Membrane (7) einen Ölabweisungsgrad von größer/gleich 4 nach AATCC-Testmethode 118-1989 ASTM aufweist.

50. Verschlußelement nach einem der Ansprüche 31 bis 48, dadurch gekennzeichnet, daß die Membrane (7) einen Ölabweisungsgrad von größer/gleich 8 nach AATCC-Testmethode 118-1989 ASTM aufweist.

Fig. 1

Fig. 2

Fig. 3

Fig. 4

**Europäisches Patentamt**

## EUROPÄISCHER RECHERCHENBERICHT

Nummer der Anmeldung

EP 97 11 1043

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| X | EP 0 350 813 A (SUMITOMO ELECTRIC INDUSTRIES) 17.Januar 1990 | 1,2,6-8, 14,16, 26,27, 31-33, 39,41 | B29C45/16 B65D51/16 |
| Y | * das ganze Dokument * | 9-13,15, 17-25, 34-38, 40,42-50 | |
| Y | DE 295 11 683 U (W. L. GORE & ASS. GMBH) 28.September 1995 | 9-13,15, 17-25, 34-38, 40,42-50 | |
| | * Ansprüche 1-18 * | | |
| A | PATENT ABSTRACTS OF JAPAN vol. 96, no. 9, 30.September 1996 & JP 08 118405 A (DAINIPPON INK ), 14.Mai 1996, * Zusammenfassung * | 1,26 | |

**RECHERCHIERTE SACHGEBIETE (Int.Cl.6)**

B29C
B65D

Der vorliegende Recherchenbericht wurde für alle Patentansprüche erstellt

| Recherchenort | Abschlußdatum der Recherche | Prüfer |
|---|---|---|
| DEN HAAG | 2.Oktober 1997 | Bollen, J |

EPO FORM 1503 03.82 (P04C03)